# FASCICULE DE BREVET EUROPEEN

(11) **EP 2 924 089 B1**
(45) Date de publication et mention de la délivrance du brevet: **06.07.2016**
(21) Numéro de dépôt: 15160310.7
(22) Date de dépôt: 23.03.2015
(51) Int. Cl.: C09J 107/02

(54) **Procédé pour l'obtention d'un produit liquide destiné à améliorer l'adhérence, sur un support, de mortiers et de colles à base de liant hydraulique**
VERFAHREN ZUM ERZEUGEN EINES FLÜSSIGEN PRODUKTS ZUR VERBESSERUNG DER HAFTFESTIGKEIT AUF EINEM TRÄGER FÜR MÖRTEL- ODER KLEBEVERBINDUNGEN AUF DER GRUNDLAGE EINES HYDRAULISCHEN BINDEMITTELS
METHOD FOR OBTAINING A LIQUID PRODUCT INTENDED FOR IMPROVING THE ADHESION OF MORTARS AND GLUES CONTAINING HYDRAULIC BINDER TO A SUBSTRATE

(30) Priorité: 27.03.2014 FR 1452658
(43) Date de publication de la demande: 30.09.2015
(73) Titulaire: Guard Industrie, 93108 Montreuil (FR); Sealock, 62430 Sallaumines (FR)
(72) Inventeur: Le Bastar, Rémi, 95230 Soisy sous Montmorency (FR); Barki, Jean-Marc, 75008 Paris (FR)
(74) Mandataire: Gevers & Orès

(56) Documents cités:
- EP-A1- 1 095 949
- US-A1- 2011 201 722

## Description

La présente invention concerne un procédé pour l'obtention d'un produit liquide destiné à améliorer l'adhérence de mortiers et de colles à base de liant hydraulique sur toutes sortes de supports, même lisses, tels que béton, produits à base de ciment (carreaux, dalles, chapes, tuiles,...), pierres naturelles et reconstituées, terres cuites (briques, tuiles, carreaux...), métaux, verre, céramique, etc...

On connaît déjà des produits de ce genre, généralement appelés "résines d'accrochage", se présentant sous la forme d'une dispersion aqueuse d'une résine synthétique de type styrène-butadiène ou styrène-acrylate, destinée à être ajoutée à un mortier à base de liant hydraulique (ciment, plâtre, chaux, ...).

De tels produits connus améliorent fortement l'adhérence du mortier sur n'importe quel support, tout en rendant ce mortier plus étanche et en augmentant la résistance de celui-ci à la traction, à la fissuration, à la flexion et à l'abrasion.

Toutefois, ces produits connus, à base de résine synthétique, sont issus du pétrole dont les ressources sont limitées et ils compromettent le développement durable de notre planète. En outre, ils présentent l'inconvénient de décanter de façon importante aussi bien pendant l'application sur un support, lorsqu'ils se trouvent dans leur pot de stockage (ce qui nécessite un fréquent malaxage) qu'après application sur un support, lorsque celui-ci est humide.

De plus, ces produits sèchent rapidement une fois appliqués sur un support, ce qui peut compromettre l'adhérence de couches superposées suivantes.

La présente invention a pour objet de remédier à ces inconvénients.

A cette fin, selon l'invention, le procédé pour l'obtention d'un produit liquide d'amélioration d'adhérence, sur un support, de mortiers et de colles à base de liant hydraulique, ledit produit se présentant sous la forme d'une dispersion aqueuse d'une résine, est remarquable en ce que, comme matière première, on utilise une dispersion de latex naturel d'hévéa commerciale stabilisée par de l'ammoniaque et au moins un stabilisant anionique et en ce que le procédé comporte les étapes suivantes :
- dilution de ladite dispersion de latex naturel par addition d'eau avec agitation,
- addition à ladite dispersion, pendant ladite addition d'eau avec agitation, d'au moins un agent apte à neutraliser ledit stabilisant anionique, et
- addition d'un acide pour neutraliser l'ammoniaque et conférer à ladite dispersion diluée un pH acide.

En effet, la demanderesse a trouvé qu'en remplaçant la résine synthétique par du latex naturel d'hévéa, le produit d'amélioration d'adhérence obtenu par le procédé conforme à l'invention est moins sensible à la décantation et sèche moins rapidement.

De plus, ce produit d'amélioration d'adhérence présente l'avantage d'utiliser une matière première naturelle renouvelable (le latex naturel d'hévéa) et non pas des dérivés du pétrole, tels que le styrène-butadiène ou styrène-acrylate.

De préférence, le produit d'amélioration d'adhérence obtenu par le procédé conforme à la présente invention comporte au moins 30% en masse d'extrait sec de latex naturel d'hévéa.

Le produit d'amélioration d'adhérence conforme à l'invention peut être utilisé pour réaliser une barbotine, destinée à former une couche d'accrochage pour une couche de mortier ultérieure, ou bien un mortier durable flexible, étanche et adhérent.

Pour obtenir une telle barbotine, on peut mélanger un volume de liant (ciment par exemple), un volume de sable et le produit conforme à l'invention et gâcher ce mélange jusqu'à obtention d'un mélange crémeux.

Pour l'obtention d'un tel mortier, utilisé par exemple comme gobetis d'accrochage, on peut mélanger un volume de liant (ciment par exemple), deux volumes de sable (par exemple de granulométrie au plus égale à 3mm) et le produit conforme à l'invention et gâcher ce mélange jusqu'à la consistance désirée.

Entre autres applications, le produit d'amélioration d'adhérence obtenu par la mise en oeuvre du procédé conforme à la présente invention peut être utilisé pour obtenir :
- des barbotines pour l'accrochage des enduits et des chapes de ciment,
- des chapes de ciment de haute résistance à l'usure artificielle et à l'érosion naturelle,
- des enduits d'imperméabilisation et d'étanchéité pour réservoirs d'eau,
- des reprises de bétonnage,
- des joints étanches et durables pour éléments préfabriqués ou coulés en place,
- des mortiers de collage pour éléments minéraux (pierres, briques, blocs, dalles béton, carrelages,...),
- des mortiers de réparation de bétons horizontaux ou verticaux, armés ou non, et précontraints,
- des mortiers de raccord ou collage de tuiles faitières et de solins,
- des collages par barbotines conformément à la norme DTU25-1, etc...

Dans le commerce, le latex naturel d'hévéa est disponible sous forme d'une dispersion stabilisée, afin d'éviter la coagulation, par de l'ammoniaque, qui sert de plus d'agent fongicide et bactéricide, et par au moins un stabilisant anionique, tel que le laurate d'ammonium.

L'inconvénient d'une telle source d'approvisionnement en latex naturel hévéa provient du fait que l'ammoniaque confère au latex naturel d'hévéa une forte odeur désagréable.

L'expérience a montré que si l'on tentait de neutraliser l'ammoniaque (et son odeur) par l'addition directe d'un acide, la dispersion du latex naturel d'hévéa était immédiatement déstabilisée et coagulait de façon irrémédiable.

Le procédé conforme à la présente invention permet d'éviter ces inconvénients et d'obtenir une dispersion stable de latex naturel d'hévéa, sans odeur désagréable.

Ladite addition d'eau avec agitation peut se faire en une seule fois ou, de préférence, en partie avant l'addition dudit agent apte à neutraliser ledit stabilisant anionique et en partie pendant cette addition.

De préférence, l'addition d'acide est ajustée pour que le pH de la dispersion inodore soit de l'ordre de 5.

Avantageusement, ledit acide de neutralisation de l'ammoniaque est l'acide citrique.

Ledit agent apte à neutraliser ledit stabilisant anionique peut être un tensioactif cationique ou une amine, telle que celle connue commercialement sous le nom « arquad T-50 ».

Dans une forme avantageuse de mise en oeuvre du procédé conforme à la présente invention, pour obtenir 100% en masse dudit produit liquide d'amélioration d'adhérence :
- on utilise entre 55% et 65% en masse de ladite dispersion de latex naturel d'hévéa commerciale ;
- on dilue ladite dispersion de latex naturel avec une proportion d'eau comprise entre 25% et 35% en masse ;
- on ajoute de 3% à 5% en masse dudit agent apte à neutraliser ledit stabilisant anionique ; et
- on ajoute de 1,5% à 3% en masse dudit acide.

Au produit liquide d'amélioration d'adhérence ainsi obtenu par la mise en oeuvre de la présente invention, on peut ajouter, afin d'améliorer certaines caractéristiques dudit produit, notamment après séchage :
- des fibres naturelles, telles que des fibres de chanvre, de lin, de cellulose, de coton,...ou des fibres synthétiques, telles que des fibres de carbone, de verre, de polypropylène,... ;
- des charges, par exemple de types fumées de silice ou cendres volantes, ou encore des charges minérales du type calcium ou argile ;
- des pigments minéraux ou organiques ;
- différents adjuvants, de préférence biosourcés, tels que tensioactifs, agents mouillants, agent antimousse, etc...

A toutes fins utiles, on indique ci-après que le document EP1095949 A1 décrit un latex naturel en solution aqueuse de KOH formant ainsi une dispersion de latex naturel dans l'eau et que le document US 2011/201722 A1 décrit une dispersion de latex naturel dans l'eau.

## Revendications

1. Procédé pour l'obtention d'un produit liquide d'amélioration d'adhérence, sur un support, de mortiers et de colles à base de liant hydraulique, ledit produit se présentant sous la forme d'une dispersion aqueuse d'une résine,
**caractérisé en ce que**, comme matière première, on utilise une dispersion de latex naturel d'hévéa commerciale stabilisée par de l'ammoniaque et au moins un stabilisant anionique et **en ce que** le procédé comporte les étapes suivantes :
- dilution de ladite dispersion de latex naturel par addition d'eau avec agitation,
- addition à ladite dispersion, pendant ladite addition d'eau avec agitation, d'au moins un agent apte à neutraliser ledit stabilisant anionique, et
- addition d'un acide pour neutraliser l'ammoniaque et conférer à ladite dispersion diluée un pH acide.

2. Procédé selon la revendication 1,
**caractérisé en ce que** ladite addition d'eau avec agitation se fait pour partie avant l'addition dudit agent apte à neutraliser ledit stabilisant anionique et pour partie pendant cette addition.

3. Procédé selon l'une des revendications 1 ou 2,
**caractérisé en ce que**, après addition dudit acide, le pH de la dispersion diluée est de l'ordre de 5.

4. Procédé selon l'une des revendications 1 à 3,
**caractérisé en ce que** l'acide ajouté à ladite dispersion diluée est l'acide citrique.

5. Procédé selon l'une des revendications 1 à 4,
**caractérisé en ce que** ledit agent apte à neutraliser ledit stabilisant anionique est un tensioactif cationique.

6. Procédé selon l'une des revendications 1 à 4,
**caractérisé en ce que** ledit agent apte à neutraliser ledit stabilisant anionique est une amine.

7. Procédé selon l'une des revendications 1 à 6,
**caractérisé en ce que**, pour obtenir 100% en masse dudit produit liquide d'amélioration d'adhérence ;
- on utilise entre 55% et 65% en masse de ladite dispersion de latex naturel d'hévéa commerciale ;
- on dilue ladite dispersion de latex naturel avec une proportion d'eau comprise entre 25% et 35% en masse ;
- on ajoute de 3% à 5% en masse dudit agent apte à neutraliser ledit stabilisant anionique ; et
- on ajoute de 1,5 % à 3% en masse dudit acide.

8. Procédé selon l'une des revendications 1 à 7,
**caractérisé par** l'addition de fibres naturelles ou artificielles audit produit liquide d'amélioration d'adhérence.

9. Procédé selon l'une des revendications 1 à 8,
**caractérisé par** l'addition de pigments minéraux ou organiques audit produit liquide d'amélioration d'adhérence.

10. Procédé selon l'une des revendications 1 à 9,
**caractérisé par** l'addition de charges audit produit liquide d'amélioration d'adhérence.

## Patentansprüche

1. Verfahren für den Erhalt eines flüssigen Produkts zur Haftverbesserung auf einer Unterlage von Mörteln und Klebern auf Basis eines hydraulischen Bindemittels, wobei sich das besagte Produkt in Form einer wässrigen Dispersion eines Harzes darstellt,
**dadurch gekennzeichnet, dass** man als Grundstoff eine marktgängige Dispersion aus natürlichem Latex vom Kautschukbaum verwendet, die mit Ammoniak und zumindest einem anionischen Stabilisator stabilisiert wird, und dadurch, dass das Verfahren die folgenden Schritte umfasst:
- Verdünnung der besagten Dispersion aus natürlichem Latex durch die Beigabe von Wasser und durch Schütteln,
- Beigabe zumindest eines Mittels zur besagten Dispersion während der besagten Beigabe von Wasser samt Schütteln, das imstande ist, den besagten anionischen Stabilisator zu neutralisieren, und
- Beigabe einer Säure zum Neutralisieren des Ammoniaks und um der besagten verdünnten Dispersion einen sauren pH-Wert zu verleihen.

2. Verfahren nach Anspruch 1,
**dadurch gekennzeichnet, dass** die besagte Beigabe von Wasser samt Schütteln teilweise vor der Beigabe des besagten Mittels erfolgt, das imstande ist, den besagten anionischen Stabilisator zu neutralisieren, sowie teilweise während dieser Beigabe.

3. Verfahren nach einem der Ansprüche 1 oder 2,
**dadurch gekennzeichnet, dass** der pH-Wert der verdünnten Dispersion nach der Beigabe der besagten Säure bei etwa 5 liegt.

4. Verfahren nach einem der Ansprüche 1 bis 3,
**dadurch gekennzeichnet, dass** die zur besagten verdünnten Dispersion hinzugegebene Säure Zitronensäure ist.

5. Verfahren nach einem der Ansprüche 1 bis 4,
**dadurch gekennzeichnet, dass** das besagte Mittel, das imstande ist, den besagten anionischen Stabilisator zu neutralisieren ein kationisches grenzflächenaktives Mittel ist.

6. Verfahren nach einem der Ansprüche 1 bis 4,
**dadurch gekennzeichnet, dass** das besagte Mittel, das imstande ist, den besagten anionischen Stabilisator zu neutralisieren ein Amin ist.

7. Verfahren nach einem der Ansprüche 1 bis 6,
**dadurch gekennzeichnet, dass** man für den Erhalt von 100 Gew.-% des besagten flüssigen Produkts zur Haftverbesserung:
- zwischen 55 Gew.-% und 65 Gew.-% der besagten marktgängigen Dispersion aus natürlichem Latex vom Kautschukbaum verwendet;
- die besagte Dispersion aus natürlichem Latex mit einem Anteil an Wasser zwischen 25 Gew.-% und 35 Gew.-% verdünnt;
- 3 Gew.-% bis 5 Gew.-% des besagten Mittels beigibt, das imstande ist, den besagten anionischen Stabilisator zu neutralisieren; und
- 1,5 Gew.-% bis 3 Gew.-% der besagten Säure beigibt.

8. Verfahren nach einem der Ansprüche 1 bis 7,
**gekennzeichnet durch** die Beigabe von natürlichen oder künstlichen Fasern zum besagten flüssigen Produkt zur Haftverbesserung.

9. Verfahren nach einem der Ansprüche 1 bis 8,
**gekennzeichnet durch** die Beigabe von mineralischen oder organischen Pigmenten zum besagten flüssigen Produkt zur Haftverbesserung.

10. Verfahren nach einem der Ansprüche 1 bis 9,
**gekennzeichnet durch** die Beigabe von Füllstoffen zum besagten flüssigen Produkt zur Haftverbesserung.

## Claims

1. Method for obtaining a liquid product for improving the adhesion, on a substrate, of mortars and glues with a hydraulic binder base, said product having the form of an aqueous dispersion of a resin,
**characterised in that**, as a raw material, a dispersion of commercial natural rubber latex stabilised with ammonia is used and at least one anionic stabiliser and **in that** the method comprises the following steps:
- diluting of said natural latex dispersion by adding water with stirring,
- adding to said dispersion, during said adding of water with stirring, of at least one agent able to neutralise said anionic stabiliser, and
- adding of an acid in order to neutralise the ammonia and confer an acidic pH to said diluted dispersion.

2. Method according to claim 1, **characterised in that** said adding of water with stirring is done in part before the adding of said agent able to neutralise said anionic stabiliser and in part during this adding.

3. Method according to one of claims 1 or 2, **characterised in that**, after adding said acid, the pH of the diluted dispersion is about 5.

4. Method according to one of claims 1 to 3, **characterised in that** the acid added to said diluted dispersion is citric acid.

5. Method according to one of claims 1 to 4, **characterised in that** said agent able to neutralise said anionic stabiliser is a cationic surfactant.

6. Method according to one of claims 1 to 4, **characterised in that** said agent able to neutralise said anionic stabiliser is an amine.

7. Method according to one of claims 1 to 6, **characterised in that**, in order to obtain 100% by weight of said liquid product for improving the adhesion;
- between 55% and 65% by weight of said dispersion of commercial natural rubber latex is used;
- said natural latex dispersion is diluted with a proportion of water between 25% and 35% by weight;
- from 3% to 5% by weight of said agent able to neutralise said anionic stabiliser is added; and
- from 1.5% to 3% by weight of said acid is added.

8. Method according to one of claims 1 to 7, **characterised by** the adding of natural or artificial fibres to said liquid product for improving the adhesion.

9. Method according to one of claims 1 to 8, **characterised by** the adding of mineral or organic pigments to said liquid product for improving the adhesion.

10. Method according to one of claims 1 to 9, **characterised by** the adding of fillers to said liquid product for improving the adhesion.
